# EUROPÄISCHE PATENTSCHRIFT

(11) **EP 1 180 715 B1**
(45) Veröffentlichungstag und Bekanntmachung des Hinweises auf die Patenterteilung: **26.01.2005**
(21) Anmeldenummer: 01117176.6
(22) Anmeldetag: 14.07.2001
(51) Int. Cl.: G02F 1/1343

(54) **Flüssigkristallanzeige mit Bildelementen kreisförmigen oder gerundeten Umrisses**
Liquid crystal display device with pixels having circular or rounded contour
Affichage à cristaux liquides avec pixels à contour circulaire ou arrondi

(30) Priorität: 14.08.2000 DE 10040274
(43) Veröffentlichungstag der Anmeldung: 20.02.2002
(73) Patentinhaber: Braun GmbH, 61474 Kronberg im Taunus (DE)
(72) Erfinder: Kressmann, Frank, 65824 Schwalbach (DE); Lubs, Dietrich, 61350 Bad Homburg (DE); Müller, Waltraut, 65830 Kriftel (DE)

(56) Entgegenhaltungen:
- DE-A- 3 732 982
- DE-A- 3 806 843
- US-A- 4 114 890
- US-A- 4 244 635

## Beschreibung

Die vorliegende Erfindung betrifft eine Flüssigkristallanzeige mit zwei einander gegenüberliegenden Substraten, mit einem zwischen den Substraten angeordneten flüssigkristallinen Medium und einer Mehrzahl von auf den Substraten angeordneten Elektroden zur Erzeugung einer Vielzahl von Bildpunkten, wobei die Elektroden ausbauclhende Abschnitte aufweisen, und kettenartig verbunden und derart ausgebildet sind, dass die Bildpunkte runde Umrisse aufweisen.

Flüssigkristallanzeigen, sogenannte LCDs sind in verschiedenen Ausführungen bekannt und werden zunehmend zur Anzeige verschiedenster Informationen verwendet. Speziell beim Einsatz in elektronischen Geräten des persönlichen Bedarfs müssen derartige Flüssigkristallanzeigen kleinbauend ausgebildet sein, da die Geräte des persönlichen Bedarfs selbst nicht groß ausgebildet sein dürfen. Dementsprechend sind die Anforderungen an die Auflösung solcher Flüssigkristallanzeigen hoch, um trotz nur kleinformatiger Anzeigefelder eine gute Lesbarkeit zu erzielen. Herkömmliche Flüssigkristallanzeigen vom Punkt-Matrix-Typ können diese Anforderungen nur schwer erfüllen. Insbesondere die Darstellung von Graphiken mit kurvenförmigen Umrissen ist schwierig zu bewerkstelligen. Der Trend ging bislang dahin, die Auflösung der Flüssigkristallanzeigen durch Verkleinerung der Bildpunkte zu erhöhen. Allerdings verursacht ein dichteres Raster von kleineren Bildpunkten verschiedene technische Probleme und deutlich höhere Kosten insbesondere in der Ansteuereinheit für das LCD. Dennoch ist die Lesbarkeit solcher Flüssigkristallanzeigen begrenzt.

Eine Flüssigkristallanzeige der eingangs genannten Art ist aus der US 4,244,635 bekannt. Bei der vorbekannten Flüssigkristallanzeige trägt ein Substrat mehrere Segmentelektroden, die durch jeweils eine kreisförmige Elektrode sowie eine ringförmige Elektrode gebildet sind. Das gegenüberliegende Substrat ist mit mehreren kreisförmigen, "gemeinsamen" Elektroden versehen. Die kreisförmigen Elektroden sind an gemeinsame, in Reiche angeordnete Stromzufuhrelektroden angeschlossen, die in x-Richtung verlaufen. Ebenfalls sind die ringförmigen Elektroden an gemeinsame, in Reihen angeordnete zweite Stromzulfuhrelektroden angeschlossen, die in x-Richtung verlaufen. Die zweiten Stromzufuhrelektroden werden durch schmale Elektrodenabschnitte gebildet, die die einzelnen ringförmigen Elektroden miteinander verbinden. Die kreisförmigen, "gemeinsamen" Elektroden sind an dritte Stromzufuhrelektroden angeschlossen, die senkrecht zur x-Richtung verlaufen und ebenfalls durch schmale Elektrodenabschnitte gebildet sind, die die einzelnen kreisförmigen Elektroden miteinander verbinden. Um zu gewährleisten, dass bei der Ansteuerung der entsprechenden Elektroden Bildpunkte mit runden bzw. kreisförmigen Umrissen erzeugt werden, muss der Durchmesser der kreisförmigen gemeinsamen Elektroden größer sein als der Durchmesser der auf dem ersten Substrat angeordneten kreisförmigen bzw. ringförmigen Elektroden. Durch die beschriebene Anordnung entstehen zwischen den erzeugten Bildpunkten relativ große Abstände, so dass bei der bekannten Flüssigkristallanzeige keine hohe Packungsdichte der Bildpunkte erreicht werden kann. Weitere bekannte Flüssigkristallanzeigen sind aus der DE 38 06 843, der DE 37 32 982 und der US 4,114,890 bereits bekannt.

Die Merkmale des Oberbegriffs von Anspruch 1 sind aus US 4 244 635 und US 4 114 890 bekannt.

Der vorliegenden Erfindung liegt daher die Aufgabe zugrunde, eine verbesserte Flüssigkristallanzeige der eingangs genannten Art zu schaffen, die Nachteile des Standes der Technik vermeidet und letzteren in vorteilhafter Weise weiterbildet. Insbesondere soll mit einfachen Mitteln bei einer guten Lesbarkeit eine hohe Packungsdichte der erzeugen Bildpunkte erreicht werden. Außerdem sollen produktionsbedingte Verschiebungsabweichungen der Substrate in x- und y-Richtung gut kompensiert werden.

Zur Lösung dieser Aufgabe schlägt die vorliegende Erfindung Flüssigkiistallanzeigen gemäß dem Patentanspruch 1 vor. Bevorzugte Ausführungsformen der Erfindung sind Gegenstand der Unteransprüche.

Die Elektroden besitzen ausbauchende oder kreissegmentförmige Abschnitte mit einer konvexen Außenkontur und diese ausbauchenden oder kreissegmentförmigen Abschnitte kettenartig verbindende Verbindungsabschnitte, wobei die auf verschiedenen Substraten liegenden Elektroden derart zueinander ausgerichtet sind, dass sich die ausbauchenden oder kreissegmentförmigen Abschnitte jeweils gegenüber liegen. Vorzugsweise sind die ausbauchenden oder kreissegmentförmigen Abschnitte nach Art einer Perlenkette aneinander gereiht, wobei die Reihen auf einem Substrat die Reihen auf dem anderen Substrat vorzugsweise senkrecht kreuzen. Die Ketten verlaufen also auf unterschiedlichen Substraten in unterschiedliche Richtungen. Die Form der Bildpunkte wird dabei durch die Überdeckung der sich überkreuzenden Elektroden definiert, so dass sich die ausbauchenden oder kreissegmentförmigen Abschnitte gegenüberliegender Elektroden ergänzen. Dadurch können produktionsbedingte Verschiebungsabweichungen der oberen und unteren Substratplatte in x-und y-Richtung - also beiden zueinander senkrecht stehenden Richtungen in einer Ebene - sehr gut kompensiert werden und führen im Ergebnis, also in der Überlappung beider Substrate, immer noch zu rundlichen Bildpunkten.

Eine bevorzugte Ausführung der Erfindung besteht darin, dass Bildpunkte mit kreisrunden Umrissen erzeugt werden, hierdurch lassen sich Kurvenverläufe von Graphen und dergleichen besonders gut darstellen.

Da die Umrisse der Bildpunkte durch die Überdeckung der auf den gegenüberliegenden Substraten liegenden ausbauchenden Abschnitte der Elektroden definiert wird, brauchen die Ausbauchungen in ihrem Umriss nicht vollständig mit den gewünschten Umrissen der Bildpunkte übereinstimmen. Insbesondere können die ausbauchenden oder kreissegmentförmigen Abschnitte der Elektroden jeweils diametral gegenüberliegende Sektoren, insbesondere Kreissektoren, mit einem Sektorwinkel von zumindest etwa 90 Grad, vorzugsweise etwa 90 Grad, bilden. Die diametral gegenüberliegenden Segmente auf dem einen Substrat ergänzen sich mit den ebenfalls diametral gegenüberliegenden, um einen Quadranten gedrehten Segmenten auf dem anderen Substrat, so dass insgesamt alle vier Quadranten abgedeckt werden. Bei jeweils kreissegmentförmiger Ausbildung ergänzen sich die überdeckenden Elektroden zu einem Kreis und definieren einen kreisrunden Bildpunkt.

In Weiterbildung der Erfindung können die Verbindungsabschnitte zwischen den ausbauchenden bzw. kreissegmentförmigen Abschnitten der Elektroden außerhalb des Überdeckungsbereiches mit der jeweils gegenüberliegenden Elektrode eine Querschnittserweiterung aufweisen. Hierdurch wird ein geringerer Widerstand in den Elektroden erzielt. Die Form der Bildpunkte wird hiervon nicht beeinflusst, da die Querschnittserweiterung außerhalb des Überdeckungsbereiches gegenüberliegender Elektroden vorgesehen ist.

Die Bildpunkte können grundsätzlich verschiedene Größe besitzen und in unterschiedlichem Rasterabstand angeordnet sein. Gemäß einer vorteilhaften Ausführung der Erfindung beträgt der Rasterabstand zwischen benachbarten Bildpunkten zwischen 0,5 und 1 mm, vorzugsweise zwischen 0,6 und 0,8 mm. Insbesondere kann der Rasterabstand nach einer Ausführung der Erfindung bei etwa 0,7 mm liegen, das heißt es sind etwa 1,4 Bildpunkte pro Millimeter vorgesehen.

Besondere Vorteile besitzt die Flüssigkristallanzeige in Verbindung mit elektrischen Geräten des persönlichen Bedarfs, insbesondere bei Blutdruckmessgeräten.
- Figur 1: einen Schnitt durch eine Flüssigkristallanzeige nach einer bevorzugten Ausführung der Erfindung in einer schematischen Darstellung,
- Figur 2a: eine Draufsicht auf die auf einem ersten Substrat aufgebrachten Elektroden, die deren Verlauf und Gestalt zeigt,
- Figur 2b: eine Draufsicht auf die auf einem zweiten Substrat aufgebrachten Elektroden, die deren Verlauf und Gestalt zeigt,
- Figur 3: eine vergrößerte Ansicht eines ausbauchenden Abschnitts einer Elektrode zur Erzeugung eines kreisrunden Bildpunktes nach einer vorteilhaften Ausführung der Erfindung,
- Figur 4: eine schematische Darstellung des Überdeckungsbereiches zweier übereinander angeordneter Elektroden aus Figur 3,
- Figur 5: eine schematische Darstellung der mit der Elektrodenanordnung aus Figur 2a und 2b erzeugbaren Bildpunkte, die die Überdeckung der Elektrodenraster bzw. Substrate bei axialem Versatz beider Substrate zueinander zeigt, und
- Figur 6: eine schematische Darstellung des Überdeckungsbereiches zweier Elektroden, die polygonförmige Ausbauchungen zur Erzeugung achteckiger Bildpunkte besitzen.

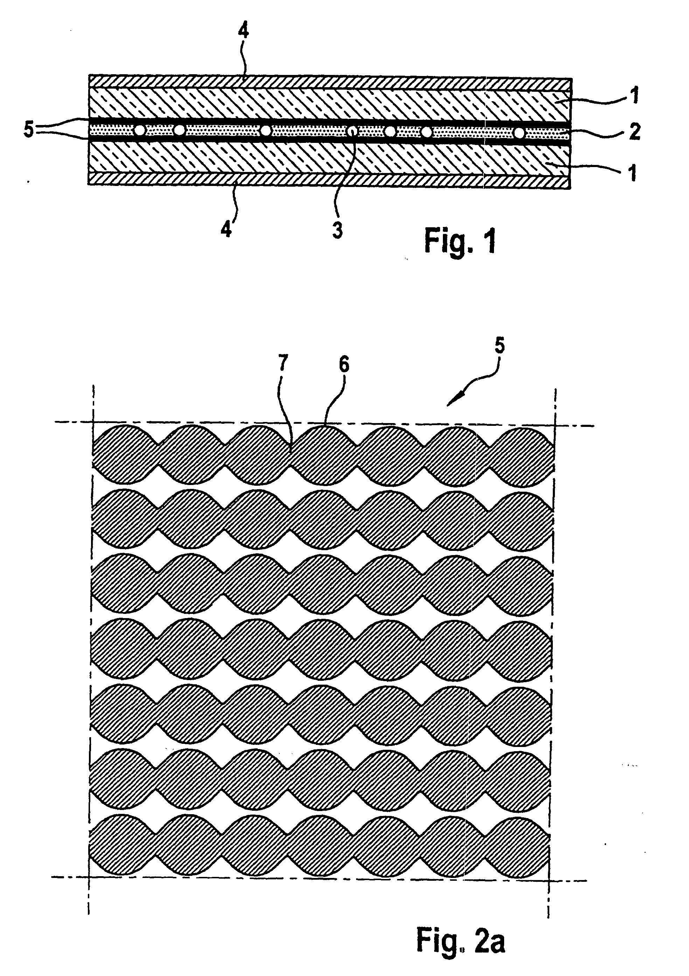

Gemäß Figur 1 besitzt die Flüssigkristallanzeige als Substrate zwei übereinanderliegende Glasplatten 1, oder andere ebene und transparente Platten, die in geringem Abstand voneinander angeordnet sind. Zwischen den beiden Glasplatten 1 ist ein flüssigkristallines Medium 2 sowie unregelmäßig verteilte optisch neutrale bzw. transparente Distanzröllchen 3 vorgesehen.

Auf den einander abgewandten Oberflächen der beiden Glasplatten 1 ist in an sich üblicher Weise jeweils ein Polarisator 4 zum Beispiel in Form einer Polarisationsfolie aufgebracht, um das durch die Glasplatte 1 tretende Licht entsprechend zu polarisieren.

Auf den einander zugewandten Oberflächen der Glasplatten 1 sind Elektroden 5 angeordnet. Die Elektroden sind durchsichtig ausgebildet und können in Form einer elektrisch leitfähigen Indium-Titan-Oxid-Schicht aufgedampft sein.

Die Figur 2a zeigt eine Draufsichten der auf eine erste der beiden Glasplatten 1 bzw. Substraten aufgedampften Leiterbahnen bzw. Elektroden 5. Die Elektroden 5 besitzen einen geradlinigen Verlauf. Die Breite der Leiterbahnen 5 ist jedoch entlang ihrem Verlauf nicht konstant. Sie besitzen aneinandergereihte ausbauchende Abschnitte 6, so daß sich der Querschnitt jeder Leiterbahn zyklisch verbreitert und wieder verjüngt. Jede Leiterbahn besitzt hierdurch eine perlenkettenartige Kontur, wobei die ausbauchenden Abschnitte 6 in einem regelmäßigen Raster angeordnet sind, das heißt die ausbauchenden Abschnitte 6 nebeneinanderliegender Leiterbahnen definieren eine gerade Linie.

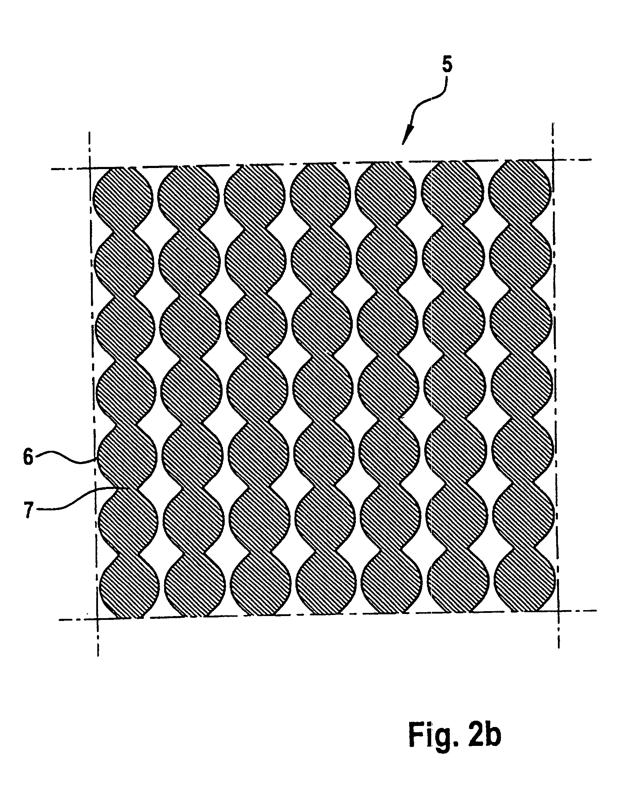

Figur 2b zeigt analog zu Figur 2a die zweite der beiden Glasplatten 1 bzw. Substrate, wobei die zweite Glasplatte 1 jedoch relativ zur ersten Glasplatte 1 um 90 Grad gedreht angeordnet ist.

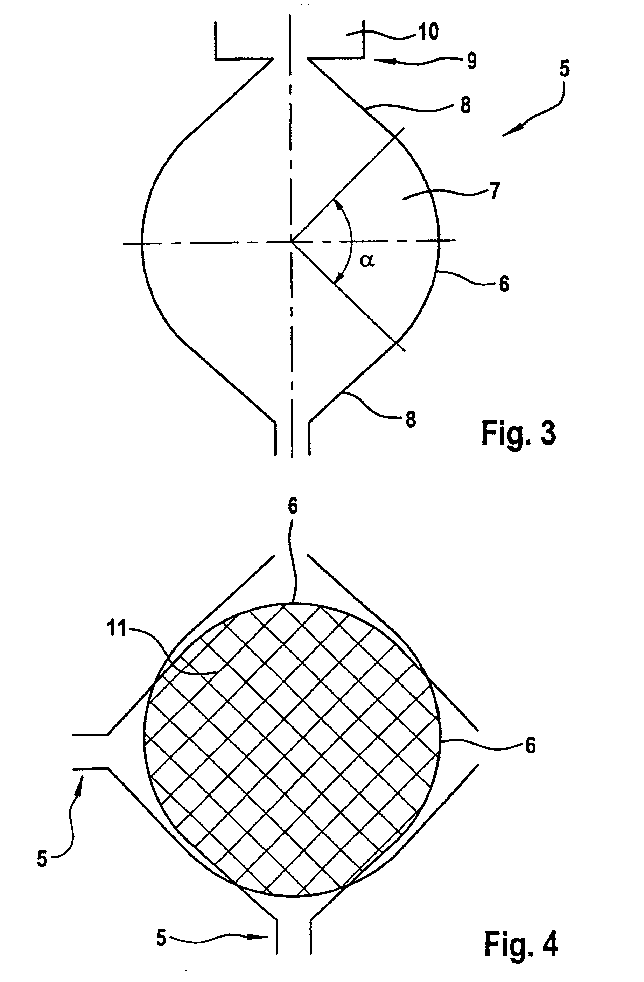

Um Bildpunkte mit kreisförmigem Umriß zu erzeugen, besitzen die ausbauchenden Abschnitte 6 vorzugsweise die in Figur 3 gezeigte vergrößert dargestellte Form. Die ausbauchenden Abschnitte 6 werden in ihren zentralen Abschnitten von einer kreisrunden Außenkontur begrenzt. Die kreisrunde Außenkontur erstreckt sich jeweils über einen Sektor von etwa α = 90 Grad, wobei die ausbauchenden Abschnitte 6 derart ausgebildet sind, daß sich die Sektoren 7 diametral gegenüberliegen und einen gemeinsamen Fußpunkt haben, der auf der Längsachse der entsprechenden Leiterbahn 5 liegt. An den Enden der kreisförmigen Kontur entlang der Sektoren 7 wird die Kontur mit geraden Linien fortgeführt. Die geraden Abschnitte 8 münden in Verbindungsabschnitte 9, die zwischen zwei benachbarte ausbauchende Abschnitte 6 einer Elektrode 5 geschaltet sind. An der Stelle, wo aufgrund des möglichen Versatzes zweier übereinanderliegender Elektroden 5 keine Überdeckung mehr stattfinden kann, besitzt der Verbindungsabschnitt 9 in einer Variante eine Querschnittserweiterung 10, das heißt es wird eine Verbindung mit möglichst großer Breite zum nächsten ausbauchenden Abschnitt 6 hergestellt. Hierdurch wird ein möglichst geringer Widerstand erreicht. In einer anderen Ausführung wird die durch die Verbindungsabschnitte gebildete Taillierung der Elektroden möglichst groß ausgebildet.

Es ergänzen sich die kreisbogenförmigen Sektoren 7 zweier übereinanderliegender Elektroden 5 zu einem idealen 360 Grad Kreis soweit beide Substrate 1 ohne Versatz -also ideal- übereinander liegen. Die Überdeckung der beiden Elektroden findet nur mit den kreisbogenförmigen Sektoren 7 statt. Hierbei ist zu beachten, daß sich die Elektroden 5 auf dem einen Substrat mit ihren Längsachsen quer zu den Elektroden bzw. deren Längsachsen auf dem anderen Substrat erstrecken, so daß die ausbauchenden Abschnitte 6 der Elektroden 5 auf dem einen Substrat gegenüber den ausbauchenden Abschnitten 6 auf dem anderen Substrat um 90 Grad gedreht sind, so daß sich die Sektoren 7 ergänzen. In dem Überlappungsbereich zwischen den übereinanderliegenden Elektroden 5 bildet sich bei Anlegen einer elektrischen Spannung ein schwarzes oder andersfarbiges Segment aus (schraffierte Fläche in Fig. 4).

Die Realität in der Fertigungspraxis zeigt jedoch oft Ungenauigkeiten in der Platzierung beider Substrate 1 übereinander. Eine Stärke der vorliegenden Ausführungsform der Elektroden besteht darin, daß auch ein Versatz beider Substrate zueinander in x- und/oder y-Richtung, also in Fig. 4 in horizontaler oder vertikaler Richtung, noch zu einem Bildpunkt führt, der etwa eine kreisförmige Außenkontur aufweist. Es liegt also eine Ausführungsform vor, mit der auch unter Berücksichtigung von Fertigungstoleranzen bei der axialen Platzierung beider Substrate zueinander Bildpunkte entstehen, die nahe am Kreisideal sind und die insbesondere keine vorspringenden Stege bedingt durch die Überlappung der Elektroden im Bereich der Verbindungsabschnitte 9 aufweisen.

Fig. 4 zeigt mit der schraffierten Fläche einen Bildpunkt, der auch mit x,y-Fertigungstoleranzversatz entstanden ist. Durch den Versatz wird je ein Bildpunkt mit einer Außenkontur gebildet, der verschiedene Kreisbogenabschnitte (mit verschiedenen Radien) oder der Kreisbogenabschnitte und gerade Abschnitte aufweist (letzterer Fall in Fig. 4 dargestellt). Durch diese Überlappung der beiden Elektroden 5 entstehen in den Abschnitten der Außenkontur des Bildpunktes, in denen die eine Außenkontur der einen Elektrode 5 durch die andere Außenkontur der anderen Elektrode 5 abgelöst wird eine Ecke, die einen stumpfen Innenwinkel einschließt und damit nahe am Kreisideal bleibt. Die zulässige Fertigungstoleranz für eine Achsverschiebung der Substrate ist ≤ dem halben Radius des Kreissektors 6. Der eingeschlossene Innenwinkel an einer solchen Ecke der Außenkontur ist somit ≥ 120 Grad und nähert sich 180 Grad soweit an, soweit die Fertigungsabweichung bzgl. des Versatzes in x- und y-Richtung beider Substrate zueinander möglichst gering ist.

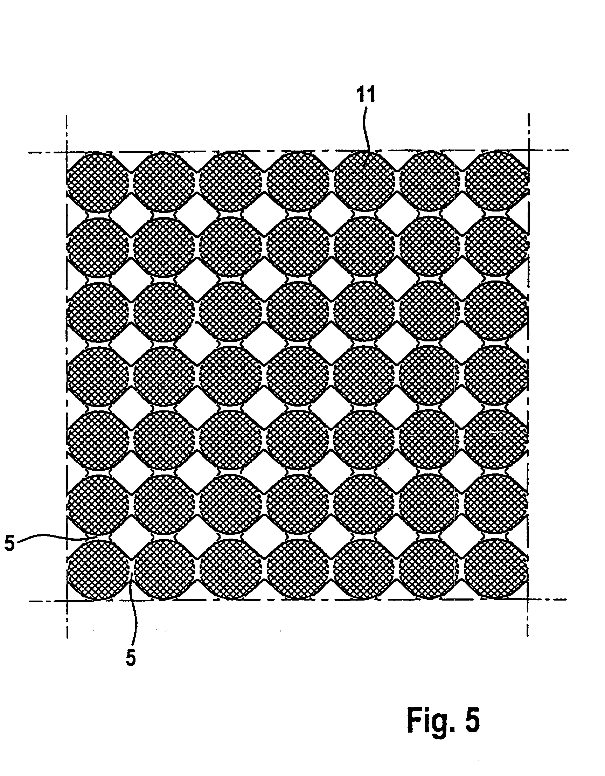

Der Rasterabstand und die Anordnung der Rasterpunkte der Elektroden 5 auf dem einen Substrat entspricht dem Raster der Elektroden 5 auf der anderen Glasplatte, so daß sich die ausbauchenden Abschnitte 6 entsprechend einem regelmäßigen Raster überdecken und eine regelmäßige Matrix von Bildpunkten erzeugt werden kann. Figur 5 zeigt das Muster bzw. das Raster der erzeugbaren Bildpunkte, die durch den Überdeckungsbereich der einander gegenüberliegenden Elektroden 5 definiert wird. Bei einer bevorzugten Ausführung sind etwa 0,5 bis 3, insbesondere 1 bis 2, vorzugsweise 1,4 Bildpunkte pro Millimeter Quadratfläche vorgesehen.

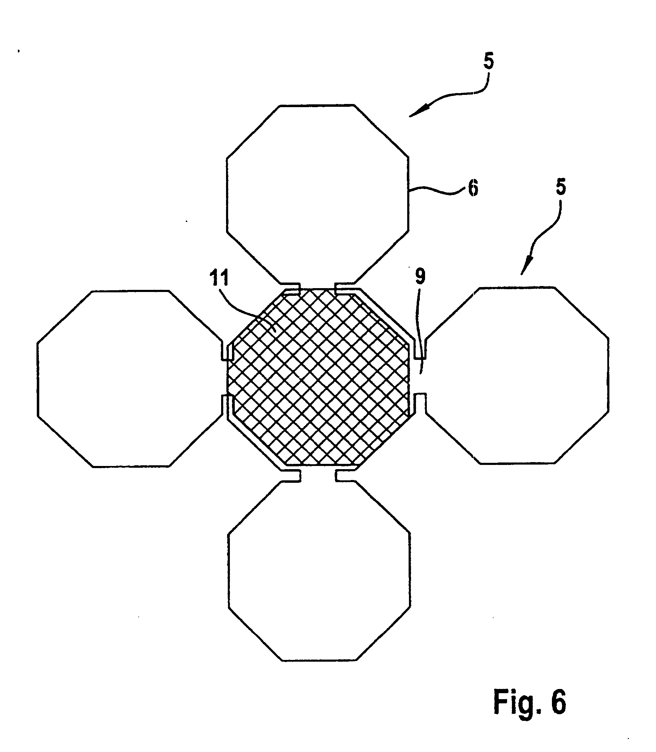

Figur 6 zeigt eine weitere Ausführung die nicht beansprucht wird. Der grundsätzliche Aufbau der Flüssigkristallanzeige entspricht dem der Figur 1. Sie unterscheidet sich durch die Ausbildung bzw. die Form der Elektroden 5. Die ausbauchenden Abschnitte 6 besitzen bei dieser Ausführung keine kreissegmentförmige Außenkontur, sondern sie sind in Form von etwa gleichseitigen Achtecken ausgebildet, wie Figur 6 zeigt. Die ausbauchenden Abschnitte 6 sind ebenfalls entlang gerader Linien aneinandergereiht, wobei sich die Linien auf dem einen Substrat senkrecht zu den Längsachsen der Elektroden auf dem anderen Substrat erstrecken. Die gegenüberliegenden Elektroden 5 überdecken sich ebenfalls mit den ausbauchenden Abschnitten 6, die in diesem Fall achteckig ausgebildet sind. Dementsprechend können achteckige Bildpunkte erzeugt werden.

Diese hier beschriebene Art von LCD Displays ist für Btutdruckmeßgeräteanzeigen besonders vorteilhaft. Andere Verwendungen im Bereich der Geräte des persönlichen Bedarfs, wie z.B. Haushaltsgeräte, Handys, Organizer, PC's, Trockenrasierer, Mundpflegegeräte sind ebenfalls vorteilhaft.

## Patentansprüche

1. Flüssigkristallanzeige mit zwei einander gegenüberliegenden Substraten (1), mit einem zwischen den Substraten angeordneten flüssigkristallinen Medium (2) und einer Mehrzahl von auf den Substraten angeordneten Elektroden (5) zur Erzeugung einer Vielzahl von Bildpunkten (11), **dadurch gekennzeichnet, dass** die Elektroden (5) ausbauchende Abschnitte (6) aufweisen, deren Kontur durch einen zentralen kreissegmentförmigen Teil mit an seinen Enden anschließenden geraden Linien gebildet ist, welche in Verbindungsabschnitte münden und kettenartig verbunden und derart ausgebildet sind, dass die Bildpunkte (11) runde Umrisse aufweisen.

2. Flüssigkristallanzeige nach Anspruch 1, **dadurch gekennzeichnet, dass** die Elektroden (5) derart ausgebildet sind, dass die Bildpunkte (11) etwa kreisrunde Umrisse aufweisen.

3. Flüssigkristallanzeige nach Anspruch 1 oder 2, **dadurch gekennzeichnet, dass** die Elektroden (5) auf verschiedenen Substraten derart ausgerichtet sind, dass sich ihre ausbauchenden Abschnitte (6) kreuzen und zu einem Bildpunkt je ergänzen.

4. Flüssigkristallanzeige nach Anspruch 3, **dadurch gekennzeichnet, dass** die ausbauchenden Abschnitte (6) diametral gegenüberliegende Sektoren (7), insbesondere Kreissektoren, mit einem Sektorwinkel (α) von mindestens etwa 90 Grad, vorzugsweise etwa 90 Grad bilden.

5. Flüssigkristallanzeige nach einem der vorhergehenden Ansprüche, **dadurch gekennzeichnet, dass** die sich zu Bildpunkten (11) ergänzenden ausbauchenden Abschnitte (6) der Elektroden (5) derart ausgebildet sind, dass bei Fertigungstoleranz bedingtem Versatz der Substrate (1) in den beiden Achsrichtungen noch Bildpunkte (11) ausbildbar sind, deren Außenkontur Kreisabschnitte und Ecken mit stumpfen eingeschlossenen Innenwinkeln aufweist.

6. Flüssigkristallanzeige nach Anspruch 5, **dadurch gekennzeichnet, dass** die Ecken der Außenkontur bzw. an die Ecken angelegte Tangenten einen Innenwinkel zwischen 90° und 180°, insbesondere einen Innenwinkel zwischen 120° und 180° einschließen.

7. Flüssigkristallanzeige nach einem der Ansprüche 5 oder 6, **dadurch gekennzeichnet, dass** die Verbindungsabschnitte (9) außerhalb eines Überdeckungsbereiches mit der jeweils gegenüberliegenden Elektrode (5) eine Querschnitts-erweiteirung (10) aufweisen.

8. Flüssigkristallanzeige nach einem der vorhergehenden Ansprüche, **dadurch gekennzeichnet, dass** die Bildpunkte (11) in einem Raster angeordnet sind, dessen Rasterabstand zwischen benachbarten Bildpunkten zwischen 0,5 mm und 1 mm, vorzugsweise zwischen 0,6 mm und 0,8 mm, insbesondere bei etwa 0,7 mm liegt.

9. Verwendung der Flüssigkristallanzeige nach einem der vorhergehenden Ansprüche in elektrischen Geräten des persönlichen Bedarfs, insbesondere in Blutdruckmessgeräten.

## Claims

1. A liquid crystal display having two opposed substrates (1), a liquid crystalline medium (2) contained between the substrates, and a plurality of electrodes (5) arranged on the substrates to produce a multiplicity of pixels (11), **characterized in that** the electrodes (5) possess bulging sections (6) whose contour is formed by a central circular-segmental part having at its ends adjoining straight lines which terminate in connecting sections and are linked in a string-type configuration and configured in such fashion that the pixels (11) have round contours.

2. The liquid crystal display as claimed in claim 1, **characterized in that** the electrodes (5) are configured in such fashion that the pixels (11) have roughly circular contours.

3. The liquid crystal display as claimed in claim 1 or 2, **characterized in that** the relative orientation of the electrodes (5) disposed on different substrates is such that their bulging sections (6) intersect, adding up to form a pixel each.

4. The liquid crystal display as claimed in claim 3, **characterized in that** the bulging sections (6) form diametrically opposed sectors (7), particularly circular sectors, with a sector angle (α) of at least about 90 degrees, preferably about 90 degrees.

5. The liquid crystal display as claimed in any one of the preceding claims, **characterized in that** the bulging sections (6) of the electrodes (11) which are complementary to form pixels (11) are configured in such fashion that in the presence of an offset of the substrates (1) in the two axial directions, which is due to manufacturing tolerances, pixels (11) are still producible whose outer contour includes circular sections and corners with obtuse included internal angles.

6. The liquid crystal display as claimed in claim 5, **characterized in that** the corners of the outer contour or the tangents applied to the corners define between them an internal angle of between 90° and 180°, in particular an internal angle of between 120° and 180°.

7. The liquid crystal display as claimed in any one of the claims 5 or 6, **characterized in that** the connecting sections (9) have an enlarged cross-section (10) outside an area of overlap with the respective opposite electrode (5).

8. The liquid crystal display as claimed in any one of the preceding claims, **characterized in that** the pixels (11) are arranged in a raster, with the raster pitch between neighboring pixels amounting to between 0.5 mm and 1 mm, preferably between 0.6 mm and 0.8 mm, being in particular of the order of about 0.7 mm.

9. The use of the liquid crystal display according to any one of the preceding claims in electrical appliances for personal use, in particular in blood pressure monitoring devices.

## Revendications

1. Dispositif d'affichage à cristaux liquides avec deux substrats se faisant face (1), un support (2) à cristaux liquides disposé entre les substrats et une pluralité d'électrodes (5) disposées sur les substrats en vue de la génération d'une pluralité de pixels (11) **caractérisé en ce que** les électrodes (5) présentent des parties renflées (6), dont le contour est formé par une partie en forme de segment circulaire central avec des lignes droites terminant ses extrémités, lesquelles se terminent dans des éléments de raccordement et sont reliées sous forme de chaîne et formées de telle sorte que les pixels (11) présentent des contours circulaires.

2. Dispositif d'affichage à cristaux liquides selon la revendication 1, **caractérisé en ce que** les électrodes (5) sont formées de telle sorte que les pixels (11) présentent des contours presque arrondis.

3. Dispositif d'affichage à cristaux liquides selon la revendication 1 ou 2, **caractérisé en ce que** les électrodes (5) sont orientées sur différents substrats de telle sorte que leurs parties renflées (6) se croisent et complètent un pixel.

4. Dispositif d'affichage à cristaux liquides selon la revendication 3, **caractérisé en ce que** les parties renflées (6) forment des secteurs (7) diamétralement opposés, en particulier, des secteurs de cercle, avec un angle de secteur (α) d'au moins environ 90 degrés, de préférence environ 90 degrés.

5. Dispositif d'affichage à cristaux liquides selon l'une des revendications précédentes, **caractérisé en ce que** les parties renflées (6) complétant les pixels (11) des électrodes (5) sont formées de telle sorte que, par décalage limité par la tolérance de fabrication des substrats (1), des pixels (11) peuvent être encore formés dans les deux directions axiales, dont le contour externe présente des segments de cercle et des coins avec des angles internes fermés obtus.

6. Dispositif d'affichage à cristaux liquides selon la revendication 5, **caractérisé en ce que** les coins du contour externe ou les tangentes appliquées aux coins comprennent un angle interne entre 90° et 180°, en particulier un angle interne entre 120° et 180°.

7. Dispositif d'affichage à cristaux liquides selon les revendications 5 ou 6, **caractérisé en ce que** les éléments de raccordement (9) présentent, à l'extérieur d'une zone de recouvrement, un élargissement en coupe (10) avec les électrodes respectives en vis-à-vis (5).

8. Dispositif d'affichage à cristaux liquides selon l'une des revendications précédentes, **caractérisé en ce que** les pixels (11) sont disposés en trame, dont la distance de trame est comprise entre des pixels adjacents entre 0,5 mm et 1 mm, de préférence entre 0,6 mm et 0,8 mm, en particulier à environ 0,7 mm.

9. Utilisation du dispositif d'affichage à cristaux liquides selon l'une des revendications précédentes dans des appareils électriques de consommation personnelle, en particulier dans des tensiomètres.
